**Europäisches Patentamt**

**European Patent Office**

**Office européen des brevets**

(19)

(11) Veröffentlichungsnummer : **0 650 309 A1**

(12) **EUROPÄISCHE PATENTANMELDUNG**

(21) Anmeldenummer : **94890141.8**

(22) Anmeldetag : **02.09.94**

(51) Int. Cl.⁶ : **H04R 25/00**

(30) Priorität : **27.09.93 AT 1943/93**

(43) Veröffentlichungstag der Anmeldung :
**26.04.95 Patentblatt 95/17**

(84) Benannte Vertragsstaaten :
**CH DE DK FR GB LI**

(71) Anmelder : **Viennatone Gesellschaft m.b.H.**
**Fröbelgasse 28-30**
**A-1164 Wien (AT)**

(72) Erfinder : **Ribic, Zlatan, Dr. Dipl.-Ing.**
**Baumgartner Strasse 44/A8**
**A-1232 Wien (AT)**

(74) Vertreter : **Kliment, Peter, Dipl.-Ing. Mag.-jur.**
**Singerstrasse 8/3/8**
**A-1010 Wien (AT)**

(54) **Hörgerät.**

(57)  Hörgerät mit einem Mikrofon, einem diesem nachgeschalteten Vorverstärker, der mit einer die Signale verarbeitenden spannungsgesteuerten Schaltung, die z.B. ein spannungsgesteuertes Filter aufweist, verbunden ist, die ihrerseits mit einem Ausgangsverstärker in Verbindung steht, der einen Hörer steuert. Um eine optimale Anpassung zu ermöglichen, ist vorgesehen, daß die die Signale verarbeitende spannungsgesteuerte Schaltung mit einer diese steuernden, Signale analysierenden Schaltung (MAC) verbunden ist, die mit dem Vor- oder Ausgangsverstärker (30, 50) eingangsseitig in Verbindung steht und im wesentlichen durch eine Hilbert-Schaltung(HS) gebildet ist, an deren beiden den Momentanwerten der Frequenz und der Amplitude des Eingangssignales liefernde Ausgänge (A, F) über Hochpaßfilter (HP1, HP2) mit den Eingängen gleichartiger Hilbertschaltungen verbunden sind und die Ausgänge aller drei Hilbertschaltungen mit Steuereingängen einer spannungsgesteuerten, Signale verarbeitenden Schaltung (40) in Verbindung stehen.

Fig. 4
SIGNAL PROCESSING CIRCUIT
(SPC)

Die Erfindung bezieht sich auf ein Hörgerät gemäß dem Oberbegriff des Anspruches 1.

Bei bekannten derartigen Lösungen wird aus dem Ein und bzw. oder Ausgangssignal ein Signal abgeleitet, das meist dem gemittelten Energieinhalt des Signales über eine durch entsprechende Zeitglieder festgelegte Zeitdauer entspricht und dieses Signal zur Steuerung eines spannungsgesteuerten Filters und meist auch eines spannungsgesteuerten Verstärkers verwendet.

Solche herkömmliche Hörgeräte bringen erfahrungsgemäß trotz sorgfältiger Anpassung nicht immer den erwünschten Erfolg. Besonders ist dies bei Hörbehinderten mit Innenohrschwerhörigkeit zu beobachten, die es in ständig steigender Zahl gibt. Der Grund dafür ist meist in den GleichrichterZeitkonstanten der für alle möglichen automatischem Regelungen und von Filtern, Verstärkern u.dgl. notwendigen Signalgleichrichter zu suchen. Übliche Gleichrichter geben meist den Effektiv- oder Mittelwert des Eingangssignales über mehrere Perioden gemittelt aus. Die so erzeugten Regelspannungen und die damit ausgeführten Signalbeeinflussungen hinken daher immer dem tatsächlichen, momentanen Eingangssignal nach.

Derartige Hörgeräte funktionieren praktisch nur in einem Punkt der Kurven für Frequenz und Lautstärke perfekt. Bei komplexen Eingangssignalen, wie z.B. bei Sprachsignalen, ist es auf diese Weise unmöglich, das natürliche Verhalten der Cochlea hinsichtlich Zeit- und bzw. oder Frequenzdomäne nachzubilden, das bei Innenohr-Patienten überdies gestört ist, d.h. nicht einem normalhörigen Ohr entspricht.

Durch die EP-A1-542 710 wurde eine Schaltung für eine verzögerungsfreie Signalbearbeitung bekannt, bei der einer zwei Allpässe aufweisenden Hilbertschaltung, die an ihren Ausgängen zwei um 90° in ihren Phasenlagen veschobenen Signale liefert, eine Verknüpfungsschaltung nachgeschaltet ist, die diese beiden Signale nach dem Algorithmus

$$A(t) = \sqrt{h_1^2(t) + h_2^2(t)}$$

verknüpft und das Ausgangssignal dieser Schaltung eines Dividierers als Dividend-signal zugeführt, wobei der Divisoreingang des Dividierers mit einem Ausgang eines Allpasses der Hilbertschaltung verbunden ist.

Damit ist es möglich den Spektralkontrast zu verstärken und eine gegenüber anderen Hörgeräteschaltungen bessere Anpassungsmöglichkeiten zu erreichen.

Allerdings ergibt sich dabei der Nachteil, daß die Original-Dynamik des Eingangssignales verloren geht und das Ausgangssignal keine oder nur sehr geringe Dynamikunterschiede aufweist.

Weiters wurde durch die EP-A1-542 711 eine Schaltung bekannt, mit der eine Frequenztransposition in Echtzeit möglich ist.

Bei dieser bekannten Schaltung ist ebenfalls eine Hilbertschaltung vorgesehen, deren Ausgänge mit einer Verknüpfungsschaltung verbunden sind, die diese Signale entweder betragsmäßig addiert oder nach dem Algorithmus

$$A(t) = \sqrt{h_1^2(t) + h_2^2(t)}$$

verknüpft. Der Ausgang dieser Verknüpfungsschaltung liefert dann ein Signal, das der momentanen Amplitude des Eingangssignales entspricht, wobei dies im Falle einer betragsmäßigen Addition nur näherungsweise der Fall ist.

Weiters sind an die Ausgänge der Hilbert-Schaltung Differenzierglieder angeschlossen, deren Ausgänge mit einer zweiten Verknüpfungsschaltung verbunden sind, die diese differenzierten Signale betragsmäßig addiert oder nach dem oben angeführten Algorithmus verknüpft. Der Ausgang dieser zweiten Verknüpfungsschaltung ist mit dem Divisoreingang eines Dividierers verbunden, deren Dividend-eingang mit dem Ausgang der ersten Verknüpfungsschaltung verbunden ist. Der Ausgang des Dividierers liefert dabei ein Signal, das der momentanen Frequenz des Eingangssignales entspricht, wobei dies im Falle einer betragsmäßigen Addition der Ausgangssignale der Hilbertschaltung, bzw. deren differenzierter Signale nur näherungsweise der Fall ist.

Durch das, der Frequenz des Eingangssignales entsprechende analytische Signal kann zwar eine Frequenztransposition erzielt werden, bei der die Tonintervalle im wesentlichen erhalten bleiben, doch ist es mit diesen Signalen nicht möglich ein Hörgerät an die jeweiligen Erfordernisse des Patienten in ausreichendem Maße anzupassen. Der Grund für die unzureichenden Möglichkeiten einer Anpassung sind die Ein- und Ausschwingzeiten, die Kompressionsfaktoren, die Übertragungscharakteristik u.dgl., die bei den herkömmlichen Lösungen nicht in Abhängigkeit von den Eingangssignalen geändert werden können.

Ziel der Erfindung ist es, diese Nachteile zu vermeiden und ein Hörgerät der eingangs erwähnten Art vorzuschlagen, das sich optimal an die jeweiligen Bedürfnisse anpassen läßt.

Erfindungsgemäß wird dies durch die kennzeichnenden Merkmale des Anspruches 1 erreicht.

Durch die beiden Hochpässe wird die Trägerfrequenz bzw. die Amplitude der Trägerschwingung unterdrückt, sodaß an den Eingängen der zweiten und dritten Verknüpfungsschaltung ein Amplitudenmodulationssignal und ein Frequenzmodulationssignal anstehen, aus denen in den Analysekreisen ein der momentanen Amplitude der Amplitudenänderung des Eingangssignales entsprechendes Signal AAM, ein der momentanen Frequenz der Amplitudenänderung des Eingangssignales entsprechendes Signal FAM, ein der momentanen Amplitude der Frequenzänderung des Eingangssignales entsprechendes Signal

AFM und ein der momentanen Frequenz der Frequenzänderung des Eingangssignales entsprechendes Signal FFM erzeugt werden. Damit stehen zur Steuerung der spannungsgesteuerten Filter sechs aus dem Eingangssignal gewonnene Signale zur Verfügung, die eine optimale signalabhängige Bearbeitung des Eingangssignales ermöglichen.

Durch die Merkmale des Anspruches 2 ergibt sich die Möglichkeit die Signalverarbeitung sehr weitgehend an die cochlearen Verhältnisse des Benutzers anpassen zu können.

Durch die Merkmale des Anspruches 3 und 4 ist es möglich verlorene Gehöreigenschaften sehr weitgehend zu rekonstruieren, wobei auch Mittelohr-Parameter berücksichtigt werden können.

Die Erfindung wird nun anhand der Zeichnung näher erläutert. Dabei zeigen:

Fig. 1 schematisch ein Hörgerät nach der Erfindung,

Fig. 2 einen Signal-Analysekreis,

Fig. 3 eine Modulations-Signale verarbeitende Schaltung,

Fig. 4 eine erfindungsgemäße Schaltung zur Bearbeitung eines Eingangssignales und

Fig. 5 die Charakterisitik einer nicht-linearen Amplituden-Regenerationsschaltung.

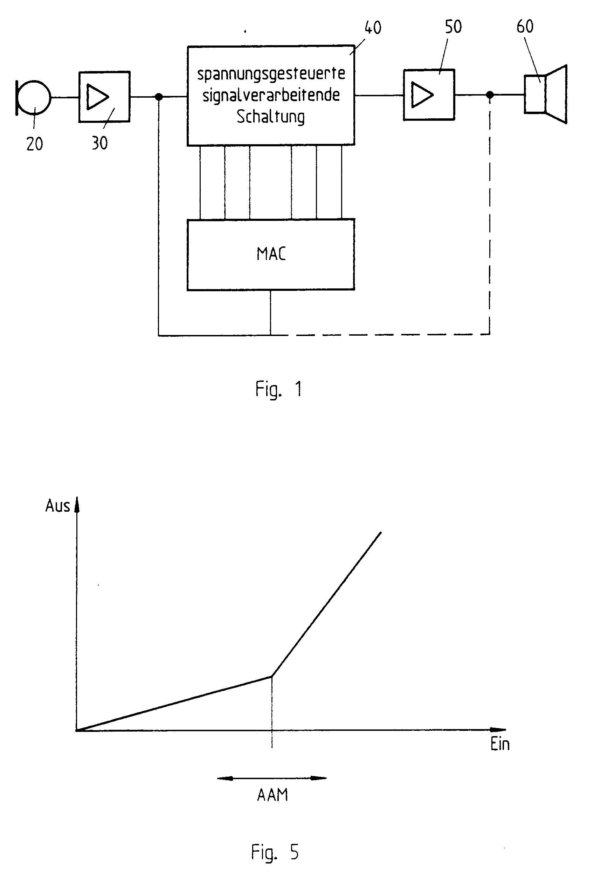

Die Fig. 1 zeigt schematisch ein erfindungsgemäßes Hörgerät. Dabei ist ein Mikrofon 20 mit einem Vorverstärker 30 verbunden, der ausgangsseitig mit einer spannungsgesteuerten, Signale verarbeitenden Schaltung 40 verbunden ist, die einem Ausgangsverstärker 50 vorgeschaltet ist, der den Hörer 60 steuert.

Die Signale verarbeitende Schaltung 40 ist von einer Signale analysierenden Schaltung MAC gesteuert, die eingangsseitig mit dem Ausgang des Vorverstärkers 20 verbunden ist. Wie strichliert angedeutet ist, kann die Analysschaltung MAC aber auch mit dem Ausgangsverstärker 50 verbunden sein.

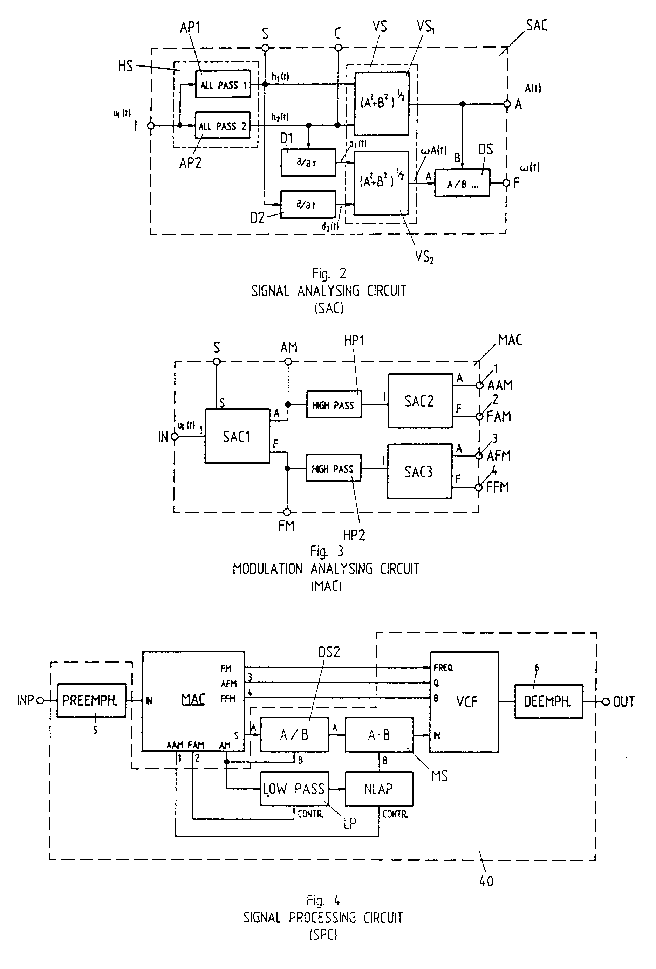

Die Fig. 2 zeigt einen Analysekreis SAC, wie er für eine in einem erfindungsgemäßen Hörgerät vorgesehene Analyseschaltung MAC verwendet wird, wobei der Analysekreis SAC eine Hilbertschaltung HS aufweist.

In der Hilbert-Schaltung HS werden zwei Hilbert-Signale $h_1(t)$ und $h_2(t)$ erzeugt, die das gleiche Energiespektrum aufweisen wie das Eingangssignal $u_i(t)$, das der Beziehung:

$$u_i(t) = A \cdot \sin(\omega \cdot t + )$$

entspricht, wobei jedoch die Hilbert-Signale $h_1(t)$ und $h_2(t)$ um $\pi/2$ gegeneinander verschoben sind.

Dabei entspricht das Signal $h_1(t)$ der Beziehung:

$$h_1(t) = A \cdot \sin(\omega \cdot t + \beta)$$

und das Signal $h_2(t)$ der Beziehung

$$h_2(t) = A \cdot \cos(\omega \cdot t + \beta)$$

wobei A die Amplitude, $\omega$ die Kreisfrequenz, t die Zeit, $\varphi$ den Phasenwinkel und $\beta$ die neue Phase bedeuten, die durch den Allpaß verursacht ist.

Weiters sind zwei Differenzierglieder $D_1$ und $D_2$ vorgesehen, die an die Ausgänge der Hilbert-Schaltung HS angeschlossen sind. Eine erste Verknüpfungsschaltung $VS_1$ ist mit ihren beiden Eingängen an die Ausgänge der Hilbert-Schaltung HS angeschlossen und erzeugt bei an den Eingängen anliegenden Signalen $h_1(t)$ und $h_2(t)$ ein Ausgangssignal A(t) nach folgendem Algorithmus:

$$A(t) = \sqrt{h_1{}^2(t) + h_2{}^2(t)} \ \ -->$$
$$A \cdot \sqrt{\sin^2(\omega t + \beta) + \cos^2(\omega t + \beta)} = A$$

Eine zweite Verknüpfungsschaltung $VS_2$ ist mit ihren beiden Eingängen an die Differenzierglieder $D_1$ und $D_2$ angeschlossen und erzeugt bei an den Eingängen anliegenden Signalen $d_1(t)$ und $d_2(t)$ ein Ausgangssignal $\omega A(t)$ nach folgendem Algorithmus:

$$\omega A(t) = \sqrt{d_1{}^2(t) + d_2{}^2(t)}$$

Ein Dividierer DS ist mit seinen Eingängen an die Verknüpfungsschaltungen $VS_1$ und $VS_2$ angeschlossen und erzeugt ein Ausgangssignal $\omega(t)$ nach folgender Formel:

$$\omega(t) = \omega A(t) / A(t)$$

Somit steht am Ausgang F des Dividierers DS ein Ausgangssignal zur Verfügung, das der momentanen Frequenz des am Eingang I anstehenden Eingangssignales $u_i(t)$ entspricht. Weiters wird über den Ausgang A, der mit dem Ausgang der Verknüpfungsschaltung VS verbunden ist, ein der momentanen Amplitude des Eingangssignales $u_i(t)$ entsprechendes Signal A(t) erhalten.

An den Ausgängen S und C des Analysekreises SAC, die mit den Ausgängen der beiden, die Hilbert-Schaltung HS bildenden Allpässe AP1 und AP2 verbunden sind, kann das aus dem Eingangssignal $u_i(t)$ gewonnene Sinus-, bzw. Cosinussignal abgegriffen werden.

Die in der Fig. 3 dargestellte Signale analysierende Schaltung MAC weist einen ersten Analysekreis SAC1 auf, an dessen Eingang I das Eingangssignal $u_i(t)$, das ein amplituden- und frequenzmoduliertes Signal, z.B. ein Sprachsignal ist, anliegt und dessen Sinus-Ausgang mit dem Ausgang S und dessen Ausgänge A und F mit den Ausgängen AM bzw. FM der Schaltung MAC verbunden sind. Weiters sind diese Ausgänge über Hochpaßfilter HP1 und HP2 mit den Eingängen eines zweiten und eines dritten Analysekreises SAC2 und SAC3 verbunden.

Durch die Hochpaßfilter HP1 und HP2 wird die Trägerfrequenz, bzw. die Amplitude der Trägerschwingung unterdrückt, sodaß am Eingang I des zweiten Analysekreises SAC2 ein Amplitudenmodulationssignal und am Eingang I des dritten Analysekreises SAC3 ein Frequenzmodulationssignal ansteht.

Die Ausgänge A und F des zweiten Analysekreises SAC2 sind mit den Ausgängen 1 und 2 der Schaltung MAC verbunden, an denen ein der momentanen Amplitude der Amplitudenänderung des Eingangssignales entsprechendes Signal AAM bzw. ein der momentanen Frequenz der Amplitudenänderung des Eingangssignales entsprechendes Signal FAM abgreifbar sind.

Die Ausgänge A und F des dritten Analysekreises SAC3 sind mit den Ausgängen 3 und 4 der Schaltung MAC verbunden, an denen ein der momentanen Amplitude der Frequenzänderung des Eingangssignales entsprechendes Signal AFM bzw. ein der momentanen Frequenz der Frequenzänderung des Eingangssignales entsprechendes Signal FFM abgreifbar sind. Damit stehen insgesamt sechs aus dem Eingangssignal abgeleitete Signale zur Bearbeitung des Eingangssignales zur Verfügung.

Fig. 4 zeigt einen Teil einer Hörgeräteschaltung, wobei die spannungsgesteuerte, Signale verarbeitende Schaltung 40 und die Signale analysierende Schaltung MAC jeweils strichliert angedeutet sind. Dabei ist der Signale analysierenden Schaltung MAC ein Vorverzerrer 5 vorgeschaltet. Die Ausgänge FM, 3 und 4 der Schaltung MAC sind mit den Eingängen FREQ, Q und B eines spannungsgesteuerten Filters VCF verbunden, daszur spannungsgesteuerten, Signale verarbeitenden Schaltung 40 gehört, wobei diese statt eines spannungsgesteuerten Filters auch einen spannungsgesteuerten Verstärker oder auch beides aufweisen könnte. Dabei wird durch das am Eingang FREQ anliegende Signal die Mittenfrequenz des Filters VCF eingestellt und durch das am Eingang Q anliegende Signal die Steilheit der Filterkurve und damit die Filtergüte, bzw. die Filterqualität gesteuert. Die Bandbreite des Filters VCF wird durch das an dessen Eingang B anliegende Signal gesteuert und am Eingang IN liegt das zu filternde Eingangssignal an.

Der Ausgang S der Schaltung MAC, an dem ein Sinussignal des Eingangssignales abgreifbar ist, ist mit dem Divisoreingang eines Dividierers DS2 verbunden, deren Dividendeingang mit dem Ausgang AM der Schaltung MAC, an dem ein der momentanen Amplitude des Eingangssignales entsprechendes Signal abgreifbar ist, verbunden ist.

Der Ausgang AM ist weiters mit einem Eingang eines steuerbaren Tiefpaßfilters LP verbunden, dessen Steuereingang mit dem Ausgang 2 der Schaltung MAC verbunden ist, an dem das Signal FAM abgreifbar ist. Der Ausgang des steuerbaren Tiefpaßfilters LP ist mit einem Eingang einer nicht-linearen Amplituden-Regenerationsschaltung NLAP verbunden, deren Steuereingang mit dem Ausgang 1 der Schaltung MAC verbunden ist, an dem das Signal AAM abgreifbar ist.

Der Ausgang der Amplituden-Regenerationsschaltung NLAP und der Ausgang des Dividierers DS2 sind mit den Eingängen eines Multiplizierers MS verbunden, dessen Ausgang mit dem Eingang IN des spannungsgesteuerten Filters verbunden ist, dem ausgangsseitig ein Entzerrer 6 nachgeschaltet ist.

Durch die Teilung des Sinussignales des Eingangssignales durch das der momentanen Amplitude des Eingangssignales entsprechenden Signales AM verschwindet zwar die Dynamik des Signales, doch wird der Spektralkontrast verstärkt, da das der momentanen Amplitude des Eingangssignales entsprechende Signal AM in Abhängigkeit von dem der momentanen Amplitude der Amplitudenänderung des Eingangssignales entsprechenden Signales AAM bearbeitet wird und dieses Signal in der nichtlinearen Amplituden-Regenerationsschaltung NLAP weiter bearbeitet wird. Die Regenerationsschaltung NLAP weist wie aus der Fig. 5 zu ersehen ist eine Charakteristik mit zwei im wesentlichen linearen Abschnitten mit unterschiedlicher Steilheit auf, wobei der Knickpunkt dieses Kurvenzuges durch das der momentanen Amplitude der Amplitudenänderung des Eingangssignales entsprechenden Signal AAM der Analyseschaltung MAC veränderbar ist. Das am Ausgang der Regenerationsschaltung NLAP erhaltene Signal wird mit dem spektralkontrastverstärkten Ausgangssignal des Dividierers DS2 multipliziert, sodaß auch die Dynamik - signalabhängig und mit dem gewünschten Kompressionsfaktor - wieder vorhanden ist. Dies ist durch den Umstand bedingt, daß die Regenerationsschaltung NLAP den ständig vorhandenen Anteil des an seinem Eingang anliegenden Signales vermindert und sich am Ausgangssignal der Regenerationsschaltung NLAP daher der Modulationsanteil des Ausgangssignale gegenüber dem ständig vorhandenen Anteil vergrößert und sich so eine vermehrte Dynamik ergibt.

Das spannungsgesteuerte Filter VCF ist im wesentlichen ein Band-Equilizer, der bestimmte Frequenzbereiche selektiv mehr oder weniger verstärkt, wobei die Mittenfrequenz durch das der momentanen Frequenz des Eingangssignals der Analyseschaltung MAC entsprechenden Signales FM, gesteuert wird. Die Bandbreite und Filtergüte (Anhebung) wird durch das der momentanen Frequenz der Frequenzänderung des Eingangssignales entsprechenden Signal FFM und das der momentanen Amplitude der Frequenzänderung des Eingangssignales entsprechende Signal AFM gesteuert.

Durch diese Maßnahmen bleibt die Dynamik des Ausgangssignales in kontrollierbaren Grenzen und die wichtigen Amplitudenunterschiede des Eingangssignales bleiben ebenfalls erhalten. Dabei kann vorgesehen sein, daß die Filtereigenschaften nur in dem für die Sprachverständlichkeit wichtigen Bereich verstellbar sind.

Mit der vorgeschlagenen Schaltung kann zur besseren Verständlichkeit der Sprache der spektrale Kontrast verstärkt, die Dynamik in gewünschter Weise geregelt und die Filtereigen-schaften dem Signal angepaßt werden.

## Patentansprüche

1. Hörgerät mit einem Mikrofon, einem diesem nachgeschalteten Vorverstärker, der mit einer die Signale verarbeitenden spannungsgesteuerten Schaltung, die z.B. ein spannungsgesteuertes Filter aufweist, verbunden ist, die ihrerseits mit einem Ausgangsverstärker in Verbindung steht, der einen Hörer steuert, **dadurch gekennzeichnet**, daß die die Signale verarbeitende spannungsgesteuerte Schaltung mit einer diese steuernden, Signale analysierenden Schaltung (MAC) verbunden ist, die mit dem Vor- oder Ausgangsverstärker (30, 50) eingangsseitig in Verbindung steht und einen ersten eine Hilbert-Schaltung (HS) aufweisenden Analysekreis (SAC1) zur Erzeugung von zwei, dem momentanen Aplituden-, bzw. dem momentanen Frequenzwert des Eingangssignales im wesentlichen entsprechenden Signalen (AM, FM) aufweist, dessen das der Amplitude des Eingangssignales entsprechende Signal (AM) liefernder Ausgang (A) über ein Hochpaßfilter (HP1) mit dem Eingang eines gleichartigen zweiten Analysekreises (SAC2) verbunden ist, dessen beide Ausgänge ein der momentanen Amplitude der Amplitudenänderung des Eingangssignales entsprechendes Signal (AAM) und ein der momentanen Frequenz der Amplitudenänderung des Einganssignales entsprechendes Signal (FAM) liefern und der ein der Frequenz des Eingangssignales entsprechendes Signal (FM) liefernde Ausgang (F) des ersten Analysekreises (SAC1) über ein weiteres Hochpaßfilter (HP2) mit dem Eingang eines dritten gleichartigen Analysekreises (SAC3) verbunden ist, dessen beide Ausgänge ein der momentanen Amplitude der Frequenzänderung des Eingangssignales entsprechendes Signal (AFM) und ein der momentanen Frequenz der Frequenzänderung des Eingangssignales entsprechendes Signal (FFM) liefern, wobei die Ausgänge (A, F, 1, 2, 3, 4) aller drei Analysekreise (SAC1, SAC2, SAC3) mit der spannungsgesteuerten Signalverarbeitungsschaltung (VCF) in Verbindung stehen.

2. Hörgerät nach Anspruch 1, **dadurch gekennzeichnet**, daß ein Ausgang der Hilbertschaltung (HS) des vom Eingangssignal beaufschlagten Analysekreises (SAC1) über einen Dividierer (DS2) und einem dieser nachgeschalteten Multiplizierer (MS) mit dem spannungsgesteuerten Filter (VCF) verbunden ist, wobei der Divisoreingang des Dividierers (DS2) mit dem das der momentanen Amplitude des Eingangssignales entsprechende Signal AM liefernden Ausgang (A) des ersten Analysekreises (SAC1) verbunden ist, der weiters mit einem Eingang eines gesteuerten Tiefpaßfilters (LP) verbunden ist, dessen Steuereingang mit dem das Signal FAM liefernden Ausgang des dritten Analysekreises (SAC3) verbunden ist, wobei der Ausgang des gesteuerten Tiefpaßfilters (LP) mit dem Eingang einer gesteuerten Amplituden-Regenerationsschaltung (NLAP) verbunden ist, deren Steuereingang mit dem ein der momentanen Frequenz der Amplitudenänderung entsprechendes Signal AFM liefernder Ausgang des zweiten Analysekreises (SAC2) verbunden ist und der Ausgang der Amplituden-Regenerationsschaltung (NLAP) mit dem Multiplikatoreingang des Multiplizierers (MS) verbunden ist.

3. Hörgerät nach Anspruch 1 oder 2, **dadurch gekennzeichnet**, daß der das Signal FM liefernde Ausgang und die, die Signale AFM und FFM liefernden Ausgänge der drei Analysekreise (SAC1, SAC2, SAC3) mit dem spannungsgesteuerten Filter (VCF) direkt verbunden sind.

4. Hörgerät nach einem der Ansprüche 1 bis 3, **dadurch gekennzeichnet**, daß der die Signale verarbeitenden Schaltung (MAC) ein Vorverzerrer (5) vorgeschaltet und ein Entzerrer (6) nachgeschaltet ist.

Fig. 1

Fig. 5

Fig. 2
SIGNAL ANALYSING CIRCUIT
(SAC)

Fig. 3
MODULATION ANALYSING CIRCUIT
(MAC)

Fig. 4
SIGNAL PROCESSING CIRCUIT
(SPC)

**Europäisches Patentamt**

**EUROPÄISCHER RECHERCHENBERICHT**

Nummer der Anmeldung

EP 94890141.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.6) |
|---|---|---|---|
| A | US - A - 4 792 977 (J.R. ANDERSON, R. BRANDER) * Gesamt * | 1 | H 04 R 25/00 |
| D,A | EP - A - 0 542 710 (VIENNATONE) | | |
| D,A | EP - A - 0 542 711 (VIENNATONE) | | |

RECHERCHIERTE SACHGEBIETE (Int. Cl.6)

H 03 D 7/00
H 03 F 1/00
H 04 R 25/00

Der vorliegende Recherchenbericht wurde für alle Patentansprüche erstellt.

| Recherchenort | Abschlußdatum der Recherche | Prüfer |
|---|---|---|
| WIEN | 03-11-1994 | ZUGAREK |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82